# EUROPEAN PATENT APPLICATION

(11) **EP 1 775 621 A1**
(43) Date of publication of application: **18.04.2007**
(21) Application number: 06001828.0
(22) Date of filing: 30.01.2006
(51) Int. Cl.: G02B 26/08

(54) **Stabilization apparatus for movable mirror**

(30) Priority: 14.10.2005 JP 2005299569
(71) Applicant: FUJITSU LIMITED, Kawasaki-shi, Kanagawa 211-8588 (JP)
(72) Inventor: Rikimaru, Kenji, Sawara-ku Fukuoka-shi Fukuoka 814-8558 (JP); Ishii, Yuji, Sawara-ku Fukuoka-shi Fukuoka 814-8558 (JP); Mori, Kazuyuki, Kawasaki-shi Kanagawa 211-8588 (JP)
(74) Representative: HOFFMANN EITLE

(57) **Abstract**

A stabilization apparatus according to the present invention comprises a stopper (21) which is in contact under pressure with one side face of a movable body (11) capable of swinging around a torsion bar (11A), this one side face being vertical to an axial direction of the movable body, to damp the movable body. The stopper is displaced between a first position at which the stopper is in contact under pressure with the side face of the movable body, and a second position apart from the side face, according to a drive voltage applied to a stopper electrode (22). The drive voltage for the stopper electrode is controlled by a control section (30) at the appropriate timing according to a drive condition of the movable body. As a result, the resonance operation can be reliably suppressed even when an angle of the movable mirror is changed at a high speed, and thus, it becomes possible to stabilize the movable mirror to be in a desired state in a short time.

## Description

### BACKGROUND OF THE INVENTION

### 1. Field of the Invention

The present invention relates to a stabilization apparatus for stabilizing an operation of a movable mirror used for an optical communication device, and in particular, an apparatus for stabilizing a movable mirror having a movable body capable of swinging around at least one axis.

### 2. Description of the Related Art

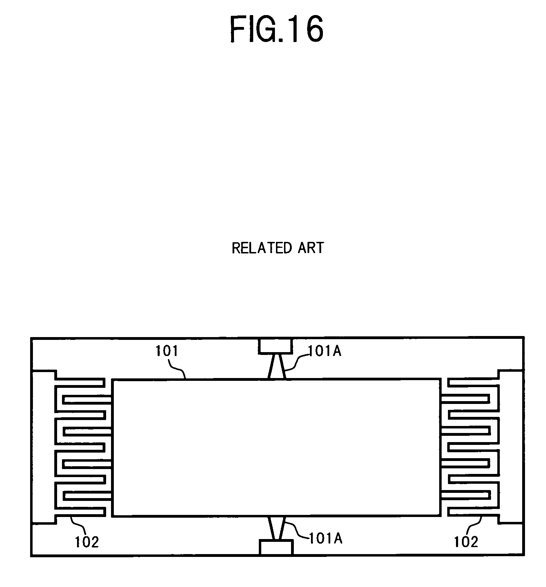

Movable mirrors formed by applying the MEMS (Micro Electro Mechanical Systems) technology (to be referred to as MEMS mirrors hereafter) are utilized in various optical apparatuses such as an optical switch and the like, for example. As shown in a plan view of FIG 16 for example, the typical MEMS mirror includes a movable body 101 formed on a substrate by applying the MEMS technology, and electrodes 102, 102. The movable body 101 has a mirror surface for reflecting light, and is axially supported by a torsion bar 101A to have a structure capable of swinging around the torsion bar 101A. Further, opposite side faces of the movable body 101, which are parallel to the torsion bar 101A, are formed in a comb-tooth shape, and on these side faces, the electrodes 102, 102 of the similar comb-tooth shape are arranged to face each other. In such a MEMS mirror, electrostatic forces are generated between the electrodes 102, 102 and the movable body 101, according to a drive voltage applied to the electrodes 102, 102 from a drive circuit (not shown in the figure), and the movable body 101 is swung by the electrostatic forces, so that an angle of the movable body 101 is controlled to be in a desired state.

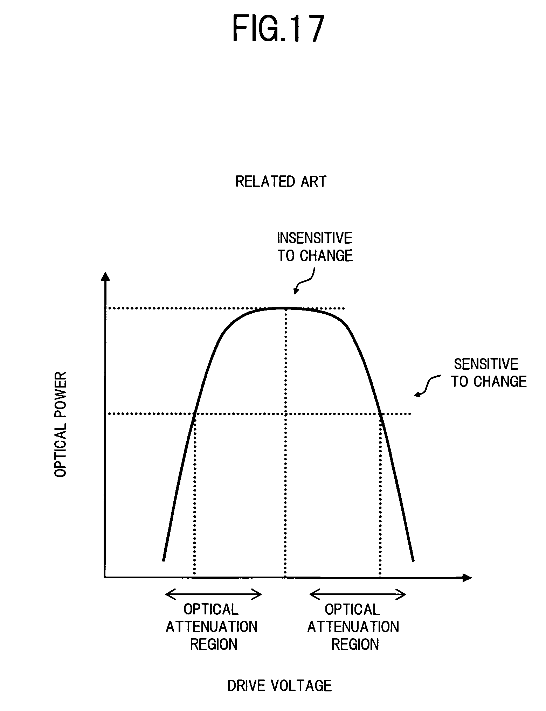

In the MEMS mirror as described above, since the angle of the movable body 101 is changed in proportion to the square of the drive voltage applied to the electrodes 102, 102, the movable body is sensitively operated as the drive voltage becomes higher. Here, in an operation method of the MEMS mirror for performing the optical attenuation by reducing the optical coupling (tolerance), as indicated by the optical tolerance curve in FIG 17 for example, the output optical power reacts insensitively to the drive voltage at the maximum optical coupling time, but reacts sensitively as the square function of the drive voltage in an attenuation region.

Further, conventionally, the drive control of the MEMS mirror has been performed only at a lower speed. However, in recent years, with the demand of speeding-up, the MEMS mirror is required to be operated at the maximum reaction frequency (resonance frequency). Here, since the movable body 101 is a mechanical element having the weight, if the angle of the movable body 101 is changed at a high speed, the certain time is required until the resonance operation of the movable body 101 is converged. Therefore, in order to stabilize the MEMS mirror to be in the desired state, it becomes important to control a drive signal given to the electrodes 102, 102 with high accuracy, and at the same time, to reliably suppress the undesirable vibration or the angle deviation of the movable body 101, which occurs with the drive control.

As the conventional technology relating to the drive control of the MEMS mirror, in particular, relating to the control of the angle (position) of the movable body, there has been known the technology in which the movable body is supported by utilizing a spring to prevent the translation of the movable body in a rotation axis direction (refer to the literature 1: Japanese Unexamined Patent Publication No. 2001-117029). Further, although different from the configuration in which the movable body is swung, there has been proposed the technology in which, in a MEMS switch for displacing in parallel the movable body by applying the drive voltage to control a contact state of the movable body with the track, a guide for setting the position of the movable body in a direction along the substrate surface is disposed, to prevent an erroneous operation of the switch as a result that a distance between the movable body and the track is changed due to the vibration of the movable body (refer to the literature 2: Japanese Unexamined Patent Publication No. 2004-319215).

However, in the conventional technology recited in the literature 1, although the translation of the movable body in the optical axis direction can be prevented by utilizing the spring, the spring force does not act on the swing of the movable body around the axis. Therefore, it is hard to suppress the resonance which occurs when the angle of the movable body is changed at the high speed as described in the above. Further, in the case where the positioning guide for the MEMS switch recited in the literature 2 is applied to the MEMS mirror in FIG 16, although the swing of the movable body can be restricted within a range where the movable body is in contact with the positioning guide, it is impossible to suppress the resonance operation which occurs within the above range since the positioning guide itself is fixed.

Further, as the problem common to the conventional technologies relating to the drive control of the MEMS mirror, generally in order to retain the MEMS mirror in the desired state, it is necessary to always supply the drive signal of predetermined voltage. However, in the case where a signal undesirable for the drive control (for example, logic noise, power noise, external noise due to electro-static discharge, or the like) is superposed on the drive signal, the angle of the movable body is unintentionally changed and such an unintentional change cannot be effectively suppressed. Moreover, in the case where the drive circuit is failed (in particular, the power shut-off), since the drive signal is no longer supplied, it becomes hard to assure the operation of the movable body. As a result, there is a possibility that the line breakage occurs when an optical communication system is constructed using the MEMS mirror. In addition, there is a drawback in that since the drive signal needs to be always supplied, the power consumption by the drive circuit is increased.

### SUMMARY OF THE INVENTION

The present invention has been accomplished in view of the above problems, and has an object to provide a stabilization apparatus capable of reliably suppressing a resonance operation of a movable mirror even when an angle of the movable mirror is changed at a high speed, and of stabilizing the movable mirror to be in a desired state in a short time.

In order to achieve the above object, the present invention provides a stabilization apparatus for stabilizing an operation of a movable mirror including a movable body capable of swinging around at least one axis, comprising: damping means displaceable between a first position being in contact under pressure with one side face of the movable body, which is vertical to an axial direction of the movable body, and a second position apart from the side face, for damping the movable body at the first position; and control means for controlling the displacement of the damping means according to a drive condition of the movable body.

In the above described configuration, the damping means is displaced to the second position, so that the movable body of the movable mirror becomes in a released state to freely swing. Further, the damping means is displaced from the second position to the first position at the appropriate timing according to the drive condition of the movable body, so that the swinging movable body is damped by a pressure force from the damping means, to become in a fixed state at a required angle.

According to the stabilization apparatus of the present invention as described in the above, the damping means, which is displaceable between the first position being in contact under pressure with the movable body side face of the movable mirror, and the second position apart from the movable body side face, is disposed, to control the displacement of the damping means by the control means. Thus, even in the case where an angle of the movable body is changed at a high speed, since an operation of the movable body is stopped by the damping means, a resonance operation which has conventionally occurred does not occur, and therefore, it becomes possible to stabilize the movable mirror to be in a desired state in a short time. Further, since the angle of the movable body is fixedly retained by the damping means, it is no longer necessary to always drive the movable mirror, differently from the conventional technology. As a result, it is possible to avoid such a situation where the angle of the movable body is unintentionally changed due to an undesirable signal such as noise or the like, and it becomes also possible to suppress the power consumption necessary for driving the movable mirror.

The other objects, features and advantages of the present invention will be apparent from the following description of the embodiments with reference to the accompanying drawings.

### BRIEF DESCRIPTION OF THE DRAWINGS

FIG. 1 is a plan view showing a configuration of a MEMS mirror to which a stabilization apparatus according to a first embodiment of the present invention is applied;
FIG 2 is a diagram showing a specific configuration example of a stopper section in the first embodiment;
FIG 3 is a flowchart showing the first control algorithm in the first embodiment;
FIG 4 is a diagram for explaining drive conditions of a movable body and a stopper in the first embodiment;
FIG 5 is a flowchart showing the second control algorithm in the first embodiment;
FIG 6 is a graph for explaining a change in control torque of the stopper in the second control algorithm;
FIG 7 is a flowchart showing the third control algorithm in the first embodiment;
FIG 8 is a graph for explaining a change in angle of the movable body in the third control algorithm;
FIG 9 is a graph for explaining a change in angle of the movable body in the other control algorithm relating to the third control algorithm;
FIG 10 is a diagram showing an application example of the stopper structure relating to the first embodiment;
FIG 11 is a plan view showing a configuration of the MEMS mirror to which the stabilization apparatus according to a second embodiment of the present invention is applied;
FIG 12 is a plan view showing a configuration of the MEMS mirror to which the stabilization apparatus according to a third embodiment of the present invention is applied;
FIG 13 is a diagram showing a specific configuration example of a stopper section in the third embodiment;
FIG. 14 is a plan view showing a configuration example in which the present invention is applied to a MEMS mirror of two-shaft structure;
FIG 15 is a plan view showing a configuration example in which the present invention is applied to a MEMS mirror array;
FIG 16 is a plan view showing a configuration example of a typical MEMS mirror; and
FIG 17 is a graph showing one example of optical tolerance curve of the typical MEMS mirror.

### DETAILED DESCRIPTION OF THE INVENTION

Hereinafter, embodiments of the present invention will be described with reference to drawings. The same reference numerals denote the same or equivalent parts in all drawings.

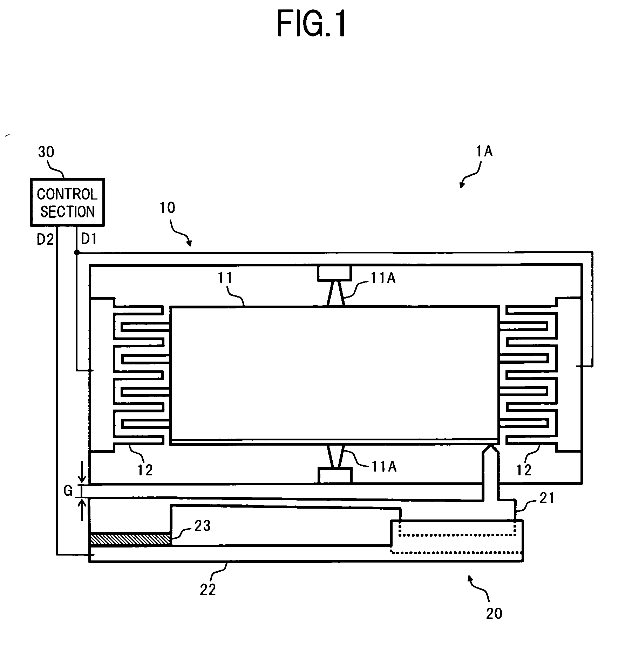

FIG 1 is a plan view showing a configuration of a MEMS mirror to which a stabilization apparatus according to a first embodiment of the present invention is applied.

In FIG 1, the present MEMS mirror 1A comprises: a main body section 10 including a movable body 11 and movable body electrodes 12, 12; a stopper section 20 including a stopper 21, a stopper electrode 22 and an insulating pad 23; and a control section 30 serving as control means for controlling operations of the main body section 10 and the stopper section 20.

The movable body 11 has a mirror surface for reflecting light, and is axially supported by a torsion bar 11A to have a structure capable of swinging around the torsion bar 11A. Further, the movable body 11 is formed such that opposite side faces thereof (the right and left side faces in FIG 1) which are parallel to the torsion bar 11A, are formed in a comb-tooth shape, and also, is processed such that the cross section of one side face thereof (the lower side face in FIG 1) which is vertical to the torsion bar 11A, has an acute angle shape.

The movable body electrodes 12, 12 are formed in a comb-tooth shape, and are arranged, respectively, outside the opposite side faces of the movable body 11, which are parallel to the torsion bar 11A. A movable body drive signal D1 is given to these movable body electrodes 12, 12 from the control section 30.

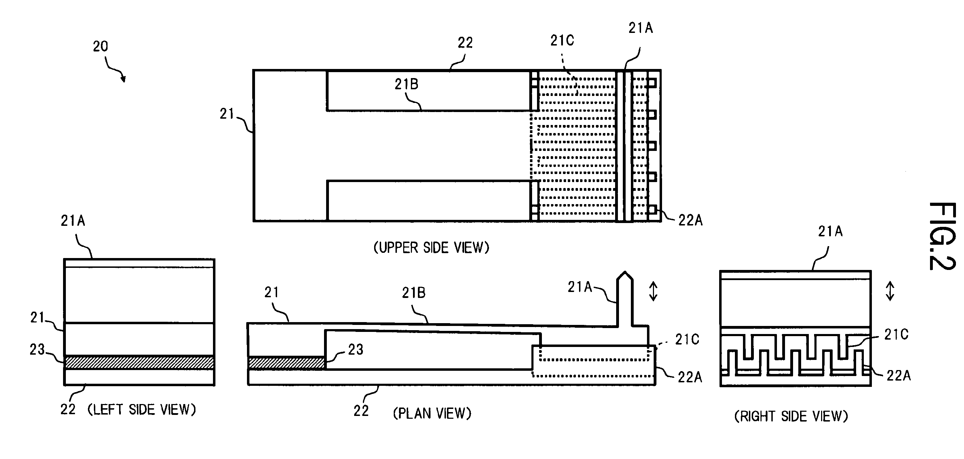

As shown in FIG 2 for example, in the stopper 21, one of end portions thereof in the longitudinal direction is fixed to the stopper electrode 22 via the insulating pad 23, and on the other end portion, a protruding portion 21A protruding to an opposite side of the stopper electrode 22 is formed. The protruding portion 21A is processed such that a tip end portion thereof has a mound shape, and the ridge line length of the mound (the thickness of the other end portion of the stopper 21) is made to be equal to or longer than a range where the movable body 11 can swing. Further, on the center portion of the stopper 21 in the longitudinal direction, there is formed an arm portion 21 B whose width and thickness are less than those of the end portions of the stopper 21. Due to the rigidity of the arm portion 21 B, the other end portion of the stopper 21 is movable in the width direction with the fixed point of the one end portion of the stopper 21 as the supporting point. A side face 21C of the other end portion of the stopper 21, which faces the stopper electrode 22, is formed in a comb-tooth shape.

The stopper 21 is fixed to one of end portions of the stopper electrode 22 in the longitudinal direction via the insulating pad 23, and a side face of the other end portion in the longitudinal direction, which faces the stopper 21, is formed in a comb-tooth shape. A stopper drive signal D2 is given to the stopper electrode 22 from the control section 30.

In the arrangement of the stopper section 20 with respect to the main body section 10, in an OFF state where a drive voltage is not applied to the stopper electrode 22, a gap G (refer to FIG 1) between the main body section 10 and the stopper section 20 is adjusted, so that a tip end of the protruding portion 21A of the stopper 21 is in contact with one side face of the movable body 11 of the main body section 10 under a previously set pressure force (damping torque). Further, it is desirable to set the contact position of the protruding portion 21A of the stopper 21 on the one side face of the movable body 11, as far away from the torsion bar 11A as possible. By arranging the protruding portion 21A of the stopper 21 on such a position, it becomes possible to achieve the high damping force.

Next, there will be described an operation of the first embodiment.

In the MEMS mirror 1A having the above configuration, electrostatic forces are generated between the movable body electrodes 12, 12, and the movable body 11, according to a voltage value of the movable body drive signal D1 supplied to the main body section 10 from the control section 30, and the movable body 11 is swung by the electrostatic forces so that an angle of the movable body 11 is controlled to be in a desired state. Further, an electrostatic force is generated between the stopper electrode 22 and the side face 21C of the stopper 21, according to the stopper drive signal D2 supplied to the stopper section 20 from the control section 30, and a position of the protruding portion 21A of the stopper 21 is controlled by this electrostatic force so that the stopper 21 is detached from the movable body 11.

Here, there will be described in detail a method of controlling the main body section 10 and the stopper section 20 by the control section 30.

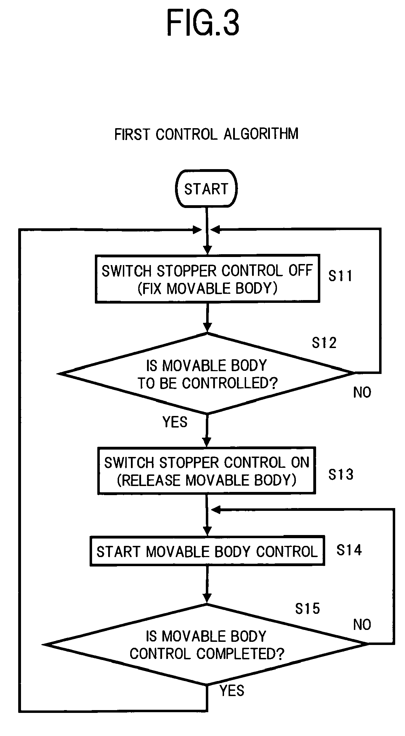

Firstly, the first control algorithm which is a basic control operation for the present MEMS mirror 1A will be explained referring to a flowchart in FIG 3.

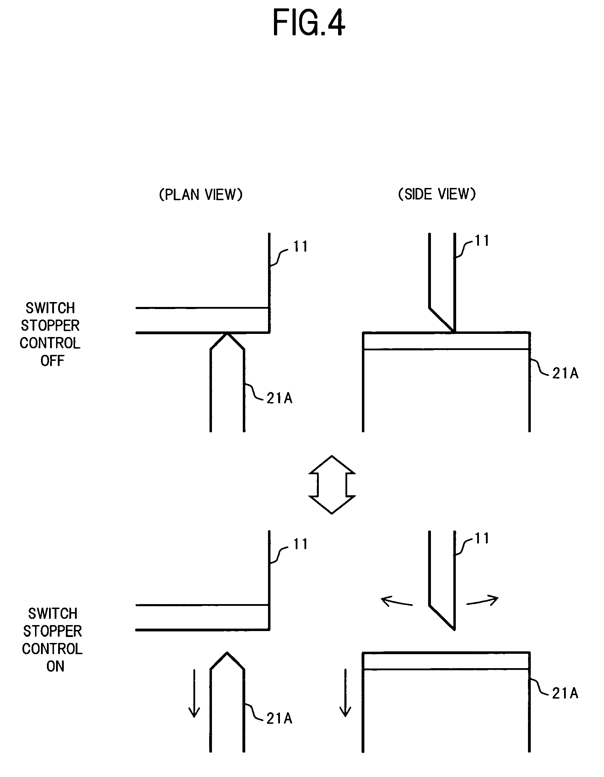

According to the first control algorithm, in step 11 (to be referred to as S11 in the figure, and the same rule will be applied to the subsequent steps), a voltage value of the stopper drive signal D2 is made to be 0V, and the protruding portion 21 A of the stopper 21 is made to be in contact under pressure with the movable body 11 (the stopper control: OFF) as shown in the upper stage of FIG 4. As a result, the movable body 11 is fixed at a constant angle.

In step 12, it is judged whether or not a control command to operate the movable body 11 is given. When it is judged that the movable body 11 is to be controlled, the routine proceeds to step 13. In step 13, a predetermined drive voltage is applied to the stopper electrode 22 by the stopper drive signal D2 so that the electrostatic force is generated between the side face 21C of the stopper 21 and the stopper electrode 22, and thus, the protruding portion 21A of the stopper 21 is made to be detached from the movable body 11 (the stopper control: ON) as shown in the lower stage of FIG 4. As a result, the movable body is released to be capable of swinging.

In step 14, a required drive voltage is applied to the movable body electrodes 12, 12 by the movable body drive signal D1 so that the electrostatic forces are generated between the movable body 11 and the movable body electrodes 12, 12. Thus, the movable body 11 is swung around the torsion bar 11A, so that an angle control of the movable body 11 is started.

In step 15, it is judged whether or not the control of the movable body 11 is completed, namely, whether or not the angle of the movable body 11 reaches a target value. When it is judged that the control of the movable body 11 is completed, the routine returns step 11 described above, where the voltage value of the stopper drive signal D2 is made to be 0V and the control of the stopper 21 is switched to the OFF state. As a result, the movable body 11 is damped by the stopper 21, and the angle of the movable body 11 is fixed at the target value. When the movable body 11 is fixed by the stopper 21, the voltage value of the movable body drive signal D1 is made to be 0V, so that the movable body 11 is in a standby state until the next control command is given.

According to a series of operations in step 11 to step 15 as described in the above, even in the case where the angle of the movable body 11 is controlled at a high speed, since the operation of the movable body 11 can be stopped by the stopper 21 at the time when the angle of the movable body 11 reaches the target value, the resonance operation which has conventionally occurred does not occur. Therefore, it becomes possible to stabilize the MEMS mirror to be in a desired state in a short time. Further, after the control of the movable body 11 is completed, since the angle of the movable body 11 is fixedly retained by the stopper 21, it is no longer necessary to always supply the movable body drive signal D1 at the required voltage, differently from the conventional technology. As a result, it is possible to avoid such a situation where the angle of the movable body 11 is unintentionally changed due to a signal undesirable for the control, such as logic noise, power noise, external noise or the like. Further, even in the case where the movable body drive signal D1 and the stopper drive signal D2 are no longer supplied due to the failure, such as the power shut-off or the like, the movable body 11 is fixedly by the stopper 21. Therefore, the occurrence of line breakage can be avoided, even when the optical communication system is constructed using the present MEMS mirror for example. In addition, after the control of the movable body 11 is completed, since it is no longer necessary to supply the drive signals D1 and D2, it is also possible to suppress the power consumption.

Incidentally, in the above first control algorithm, the simple ON/OFF switching is performed for the control of the stopper 21. However, it becomes possible to suppress the resonance operation of the movable body 11 more effectively, by applying the second and third control algorithms to be described hereunder.

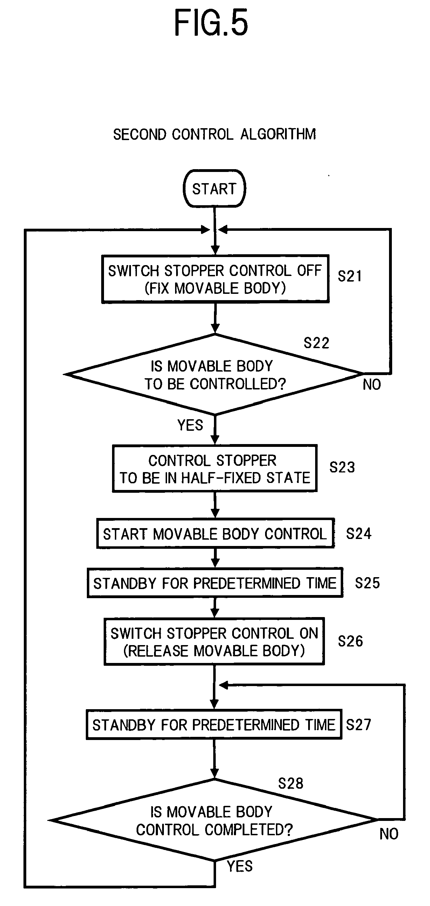

Firstly, there will be specifically described the second control algorithm referring to a flowchart in FIG. 5.

In the second control algorithm, similarly to steps 11 and 12 in the above described first control algorithm, after the control of the stopper 21 is made OFF and the movable body 11 is fixed in step 21, when it is judged in step 22 that the movable body 11 is to be controlled, the routine proceeds to step 23.

In step 23, the stopper drive signal D2 for driving the stopper 21 under a half-fixed state is output to the stopper section 20 from the control section 30. The half-fixed state means a state where the stopper 21 is in contact with the movable body 11 by a torque at which the movable body 11 is capable of sliding, so-called a half-clutched state. The voltage value of the stopper drive signal D2 at this time is set within a previously set range lower than the voltage value for when the movable body 11 is released in step 13 of the above first control algorithm. Note, since there are variations in damping torque for the stopper 21, the range of the drive voltage for making the stopper 21 to be in the half-fixed state is set to an appropriate range by acquiring the profiles of the drive voltage and the damping torque for each stopper section 20.

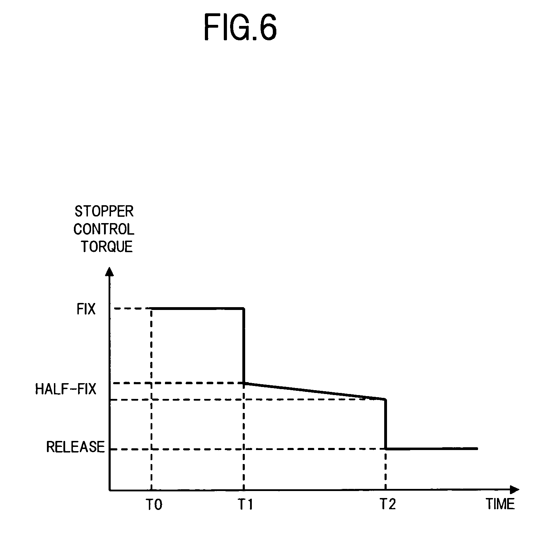

In step 24, when the stopper 21 is made to be in the half-fixed state in step 23, the required drive voltage is applied to the movable body electrodes 12, 12 by the movable body drive signal D1, and the angle control of the movable body 11 is started. Then, in step 25, the angle control of the movable body 11 is continuously performed while maintaining the half-fixed state of the stopper 21, until a previously set standby time has elapsed. Note, in the half fixed state of the stopper 21 during the standby time, as indicated by the time T1 to the time T2 in FIG 6 for example, it is desirable to control the drive voltage for the stopper 21 so that the damping torque for the stopper 21 is gradually reduced.

In step 26, the control of the stopper 21 is switched to the ON state from the half fixed state, and the protruding portion 21A of the stopper 21 is detached from the movable body 11 so that the movable body 11 is released. Then, in step 27, the angle control of the movable body 11 is continuously performed under the state where the stopper 21 is detached from the movable body 11, until the previously set standby time has elapsed.

In step 28, it is judged whether or not the angle of the movable body 11 reaches the target value, and when the angle of the movable body 11 reaches the target value, the routine returns step 21, where the voltage value of the stopper drive signal D2 is made to be 0V, so that the control of the stopper 21 is switched to the OFF state and the movable body 11 is fixed by the stopper 21. Further, the voltage value of the movable body drive signal D1 is made to be 0V, so that the movable body 11 is made to be in the standby state until the next control command is given.

According to the second control algorithm as described in the above, the stopper 21 is once controlled to be the half-fixed state when the movable body 11 is controlled, so that the resonance operation of the movable body 11 can be reliably suppressed. Therefore, it becomes possible to stabilize the MEMS mirror to be in the desired state in a shorter time.

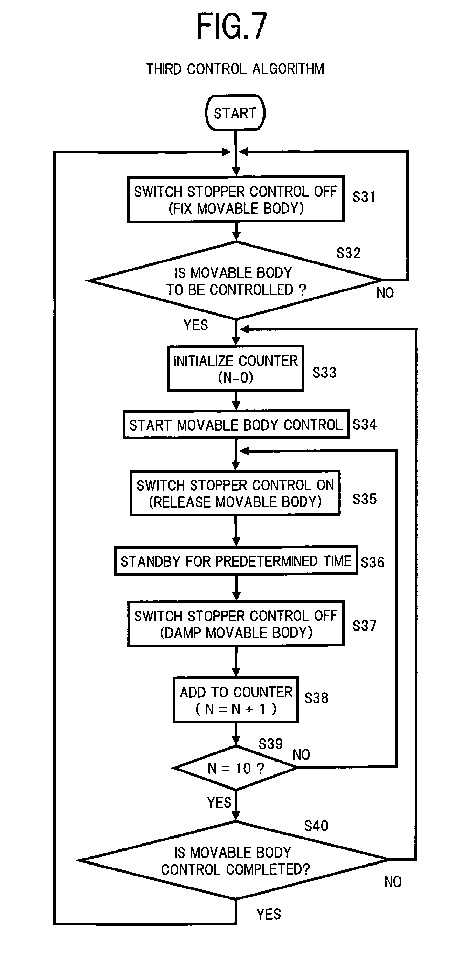

Next, there will be specifically described the third control algorithm referring to a flowchart in FIG 7.

In the third control algorithm, similarly to steps 11 and 12 in the above first control algorithm, after the control of the stopper 21 is made to be in the OFF state and the movable body 11 is fixed in step 31, when it is judged in step 32 that the movable body 11 is to be controlled, the routine proceeds to step 33.

In step 33, a value N of a counter (not shown in the figure) disposed in the control section 30 is initialized to 0. This counter is utilized for counting ON/OFF switching frequencies of the stopper 21, as described later.

In step 34, the required drive voltage is applied to the movable body electrodes 12, 12 by the movable body drive signal D1, and the angle control of the movable body is started.

In step 35, the control of the stopper 21 is switched to the ON state from the OFF state, and the protruding portion 21A of the stopper 21 is detached from the movable body 11 so that the movable body 11 is released. Then, in step 36, the angle control of the movable body 11 is continuously performed under the state where the stopper 21 is detached from the movable body 11, until the previously set standby time has elapsed. This standby time is set in accordance with, for example, a cycle corresponding to about four times the resonance frequency f which is inherent in the movable body 11 (≅1/4f).

In step 37, the control of the stopper 21 is switched to the OFF state from the ON state, and the movable body 11 is damped by the stopper 21.

In step 38, the value N of the counter is added with one (N = N+1). Then, in step 39, it is judged whether or not the value N of the counter reaches previously set ON/OFF switching frequencies (for example, 10 times). In the case where the value N of the counter is smaller than 10, the routine returns step 35 described above, where the control of the stopper 21 is switched again to the ON state and the angle control of the movable body 11 is repetitively performed under the state where the stopper 21 is detached from the movable body 11.

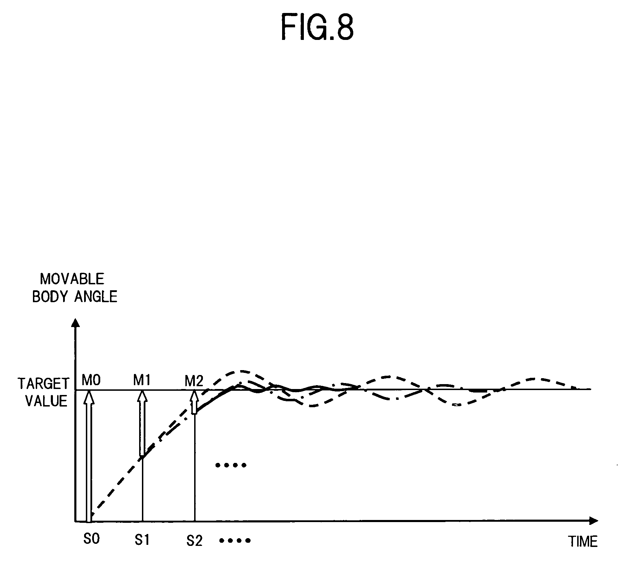

FIG 8 shows exemplarily a time change in the angle of the movable body 11 by the periodic ON/OFF switching of the stopper 21 as described above. The times S0, S1, S2, ... show the timing at which the control of the stopper 21 is switched to/from the OFF state from/to the ON state, and this control cycle corresponds to the above standby time (≅1/4f). Arrow lines in FIG 8 typically show moments of the movable body 11, which occur when the movable body 11 is damped by the stopper 21. The moment M1 occurring at the time S1 is lower than the moment M0 occurring at the time S0, and the moment M2 occurring at the time S2 is further lower. Therefore, as shown in the angle change in the movable body 11 indicated by the solid line in FIG 8, the resonance of the movable body 11 is effectively suppressed.

When it is judged in step 39 that the value N of the counter reaches 10, the routine proceeds to step 40, where it is judged whether or not the angle of the movable body 11 reaches the target value. In the case where the angle of the movable body 11 does not reach the target value, the routine returns step 33 where the value N of the counter is initialized, and thereafter, the operations of steps 34 to 39 are repetitively performed. On the other hand, in the case where the angle of the movable body 11 reaches the target value, the routine returns step 31 described above, where the movable body 11 is fixed by the stopper 21, and also the voltage value of the movable body drive signal D1 is made to be 0V, so that the movable body 11 is made to be in the standby state until the next command is given.

According to the third control algorithm as described in the above, the resonance operation of the movable body 11 can be reliably suppressed even by periodically switching the ON/OFF control of the stopper 21 when the movable body 11 is controlled. Therefore, it becomes possible to stabilize the MEMS mirror to be in the desired state in a shorter time.

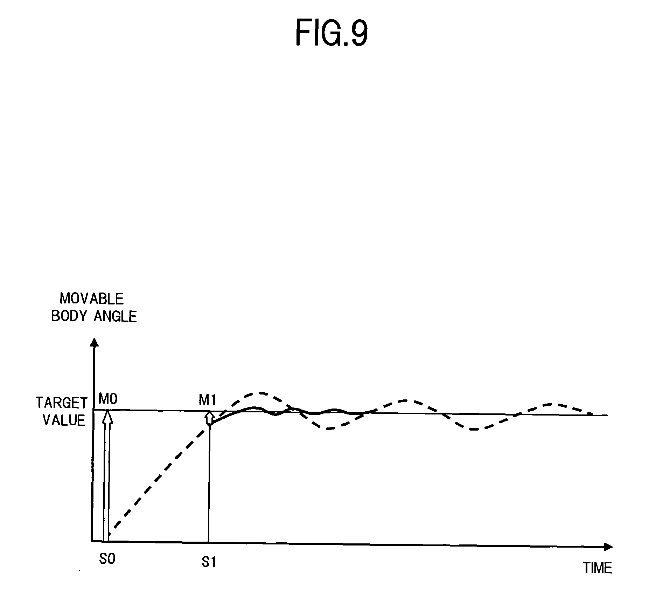

Incidentally, in the above third control algorithm, there has been shown the one example in which the ON/OFF control of the stopper 21 is switched in the cycle corresponding to about four times the resonance frequency f of the movable body 11. However, as shown in FIG. 9 for example, the moment M1 occurring at the time S1 can be reduced, even by predicting the timing before the angle of the movable body 11 reaches the target value based on the resonance frequency of the movable body 11, and setting the time S1 so as to correspond to this timing. Therefore, it is possible to effectively suppress the resonance of the movable body 11.

In the configuration of the first embodiment shown in FIG 1, the tip end of the protruding portion 21A of the stopper 21 is processed to have the mound shape, and also the one side face of the movable body 11, with which the protruding portion 21A is in contact, is processed to have the acute angled cross section, so that the movable body 11 and the protruding portion 21A of the stopper 21 are in contact with each other at one point (refer to the upper stage of FIG 4). Such a structure is achieved by considering that, since the mechanical constitutional elements manufactured using the MEMS technology are the material bodies finely processed by the so-called nanotechnology, if an area of the contact portion between two elements becomes wider, the electrostatic capacity is generated between the two elements, and the excess torque is necessary for detaching the two elements. Namely, by realizing the structure in which the movable body 11 and the stopper 21 are in contact with each other at one point, it is possible to achieve an effect in that the stopper 21 can be detached from the movable body 11 even at the low drive voltage.

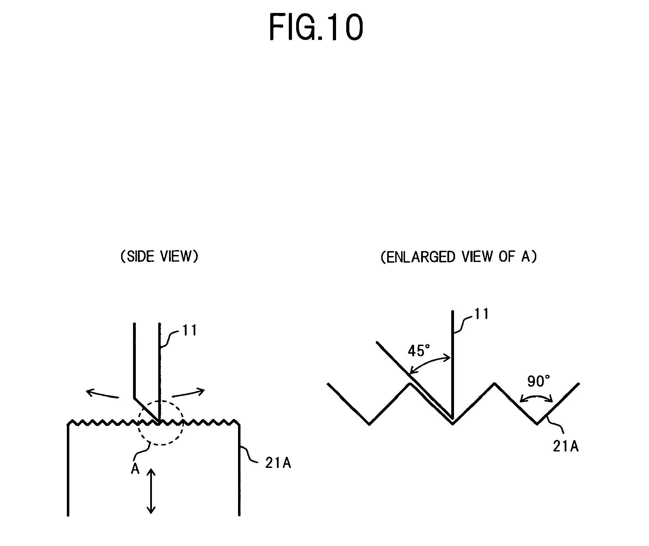

However, in the structure in which the movable body 11 and the stopper 21 are in contact with each other at one point, there is caused a possibility that the sufficient damping force cannot be obtained. In such a case, as shown in FIG 10 for example, it is preferable that the tip end portion of the protruding portion 21A of the stopper 21 is processed to have a saw-tooth shape, to prevent the movable body 11 from slipping. In the example of FIG. 10, triangular grooves of about 90° are consecutively disposed on the mound shaped tip end portion of the protruding portion 21A so that the cross section of the side face of the movable body 11 is about 45°. By applying such a structure, it becomes possible to detach the stopper 21 from the movable body 11 even at the low drive voltage, and also to obtain the sufficient damping force by the stopper 21.

Next, there will be described a second embodiment of the present invention.

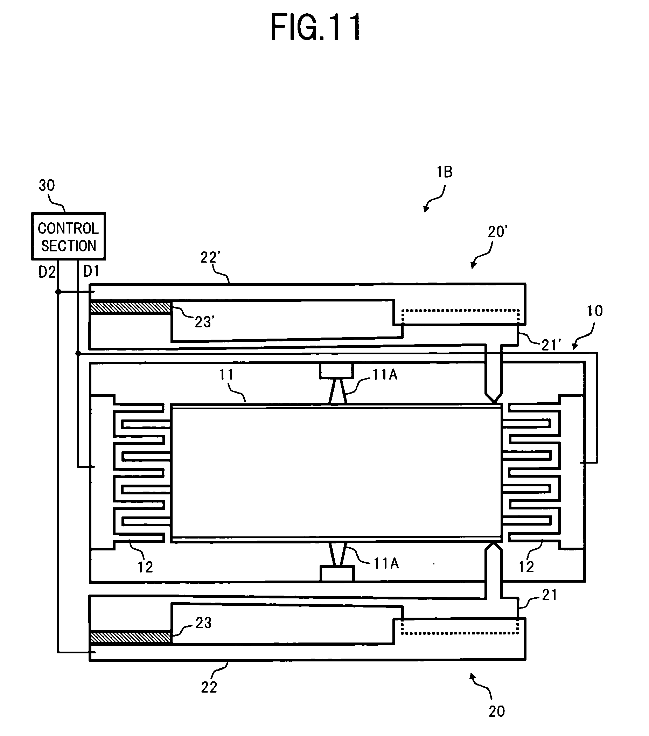

FIG 11 is a plan view showing a configuration of the MEMS mirror to which the stabilization apparatus according to the second embodiment of the present invention is applied.

In FIG 11, the present MEMS mirror 1B is configured such that, for the configuration of the above first embodiment, a stopper section 20' having a configuration same as that of the stopper section 20 is disposed on a side face (the upper side face in FIG 11) opposite to the side face on which the stopper section 20 of the main body section 10 is disposed, so that a set of stopper sections 20, 20' are arranged symmetrically with respect to the main body section 10. This stopper section 20' is driven by the stopper drive signal D2 common to the stopper section 20, which is supplied from the control section 30. Further, a side face of the movable body 11 of the main body section 10, which is positioned on the stopper section 20' side, is processed to have an acute angled cross section, so as to correspond to the disposition of the stopper section 20'.

In the configuration of the above described first embodiment, in order to enhance the damping force by the stopper 21, the arrangement of the main body section 10 and the stopper section 20 is determined, so that the protruding portion 21A of the stopper 21 is in contact with the movable body 11 at a position as far away from the torsion bar 11A on the side face of the movable body 11 as possible. Therefore, when the control of the stopper 21 is switched to the OFF state, the force from the stopper 21 acts on the movable body 11 at the position apart from the torsion bar 11A from one side, and thus, there is a possibility that the distortion occurs in the movable body 11 to give the torsion bar 11A stress.

Therefore, in the second embodiment, the stopper section 20' is also arranged on the opposite side of the main body section 10, and the same forces act on the movable body 11 from both sides of the movable body 11, so that the distortion of the movable body 11 is avoided. As a result, in the present MEMS mirror 1 B, it becomes possible to achieve the improvement of the durability, in addition to the effect in the above described first embodiment.

Next, there will be described a third embodiment of the present invention.

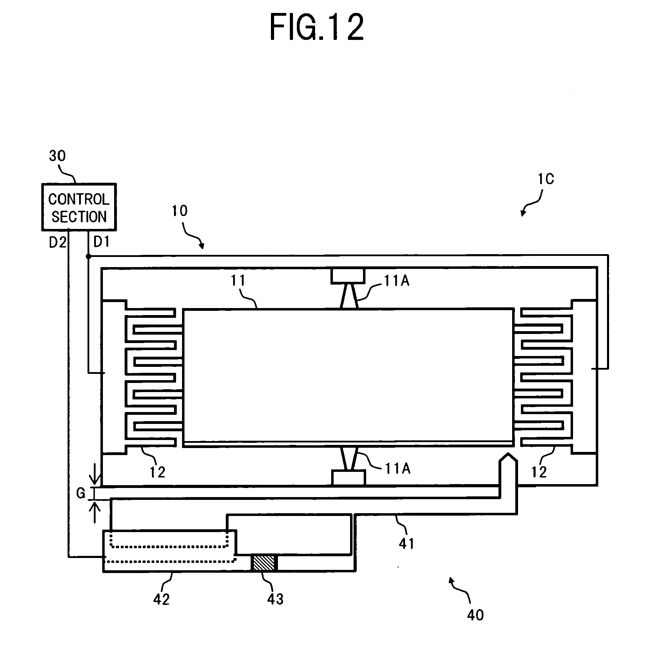

FIG 12 is a plan view showing a configuration of the MEMS mirror to which the stabilization apparatus according to the third embodiment of the present invention is applied.

In FIG 12, the configuration of the present MEMS mirror 1C differs from that of the first embodiment shown in FIG 1 in that there is disposed a stopper section 40 of a structure in which the movable body 11 is released when the drive voltage is made to be 0V, in place of the stopper section 20 of the structure in which the movable body 11 is fixed when the drive voltage is made to be 0V. This stopper section 40 comprises a stopper electrode 42 and an insulating pad 43.

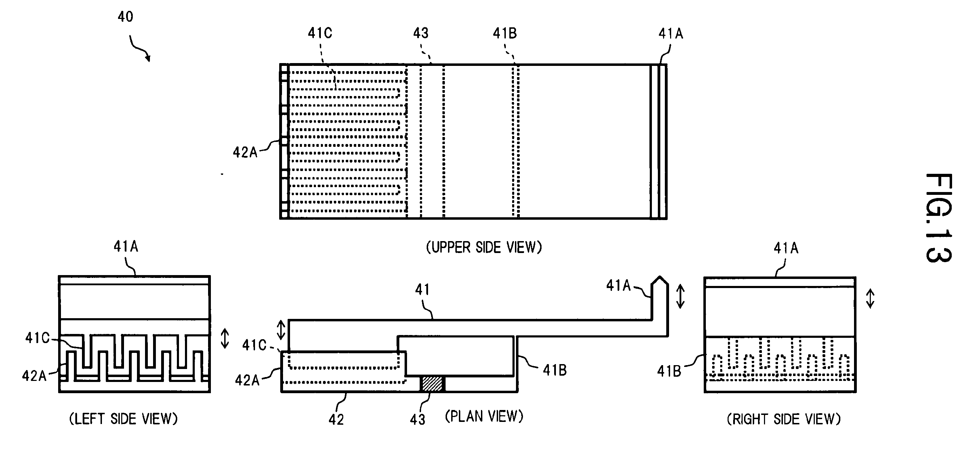

To be specific, as shown in FIG 13 for example, the stopper 41 has a structure in which both end portions thereof are capable of swinging with a torsion bar 41 B disposed on the approximate center of the stopper 41 in the longitudinal direction as a supporting point, and a protruding portion 41A is formed on one of the end portions. Similarly to the first embodiment described above, the protruding portion 41A is processed such that a tip end portion thereof has a mound shape, and the ridge line length of the mound is made to be equal to or longer than the range where the movable body 11 can swing. Further, a side face 41C of the other end portion of the stopper 41 is formed in a comb-tooth shape.

In the stopper electrode 42, an end portion thereof connected to a torsion bar 41 B of the stopper 41 is fixed to the stopper 41 via the insulating pad 43, and a side face 42A thereof facing the side face 41C of the stopper 41 is formed in a comb-tooth shape. The stopper drive signal D2 from the control section 30 is given to the stopper electrode 42.

In the arrangement of the stopper section 40 with respect to the main body section 10, in the OFF state where the drive voltage is not applied to the stopper electrode 42, a gap G (refer to FIG 12) between the main body section 10 and the stopper section 40 is adjusted, so that a tip end of the protruding portion 41A of the stopper 41 is apart from one side face of the movable body 11 of the main body section 10. Namely, in the ON state where the required drive voltage is applied to the stopper electrode 42, the side face 41C of the stopper 41 is attracted to the stopper electrode 42 side, so that the protruding portion 41A of the stopper 41 is in contact with the one side face of the movable body 11 and the movable body 11 is damped. It is desirable that a position at which the protruding portion 41A of the stopper 41 is in contact with the movable body 11 on the one side face of the movable body 11 is a position as far from the torsion bar 41 B as possible. By arranging the protruding portion 41A of the stopper 41 on such a position, it becomes possible to obtain the high damping force.

In the MEMS mirror 1C having the above configuration, similarly to the operation in the above first embodiment, the electrostatic forces are generated between the movable body electrodes 12, 12, and the movable body 11, according to the voltage value of the movable body drive signal D1 supplied to the main body section 10 from the control section 30, and the movable body 11 is swung by the electrostatic forces so that the angle of the movable body 11 is controlled to be in the desired state. Further, an electrostatic force is generated between the stopper electrode 42 and the side face 41C of the stopper 41, according to the stopper drive signal D2 supplied to the stopper section 40 from the control section 30, and a position of the protruding portion 41A of the stopper 41 is controlled by this electrostatic force so that the stopper 41 is in contact with the side face of the movable body 11 by a pressure force (damping torque) corresponding to the drive voltage.

It is possible to consider that the control algorithms for the main body section 10 and the stopper section 40 by the control section 30 is similar to those in the first embodiment, by reversing the relationship of the ON/OFF control of the stopper in the first to third control algorithms described in the above first embodiment, and therefore, the description of the control algorithms in the third embodiment is omitted here.

According to the MEMS mirror 1C in the third embodiment as described in the above, even in the case where the angle of the movable body 11 is controlled at a high speed, since the operation of the movable body 11 is stopped by the stopper 41, the resonance operation which has conventionally occurred does not occur, and thus, it becomes possible to stabilize the MEMS mirror to be in the desired state in a short time. Further, after the control of the movable body 11 is completed, since the angle of the movable body 11 is fixedly retained by the stopper 41, it is no longer necessary to always supply the movable body drive signal D1 of required voltage, differently from the conventional technology. As a result, it becomes possible to avoid such a situation where the angle of the movable body 11 is unintentionally changed due to a signal undesirable for the control, such as logic noise, power noise, external noise or the like, and also it becomes possible to suppress the power consumption necessary for driving the movable body 11. In addition, since the configuration is such that the movable body 11 and the stopper 41 are detached from each other in the state where the stopper 41 is not driven, the stopper section 40 can be formed in the process same as that for forming the main body section 10. As a result, it becomes also possible to achieve the manufacturing cost reduction of the MEMS mirror 1C.

Also in the third embodiment, similarly to the configuration shown in FIG 10 described above, by forming the tip end portion of the protruding portion 41A of the stopper 41 in a saw-tooth shape, it is possible to improve the damping force by the stopper 41. Further, similarly to the second embodiment shown in FIG 11 described above, by disposing a stopper section having a configuration same as that of the stopper section 40 on the opposite side of the main body section 10, it is possible to avoid the distortion of the movable body 11.

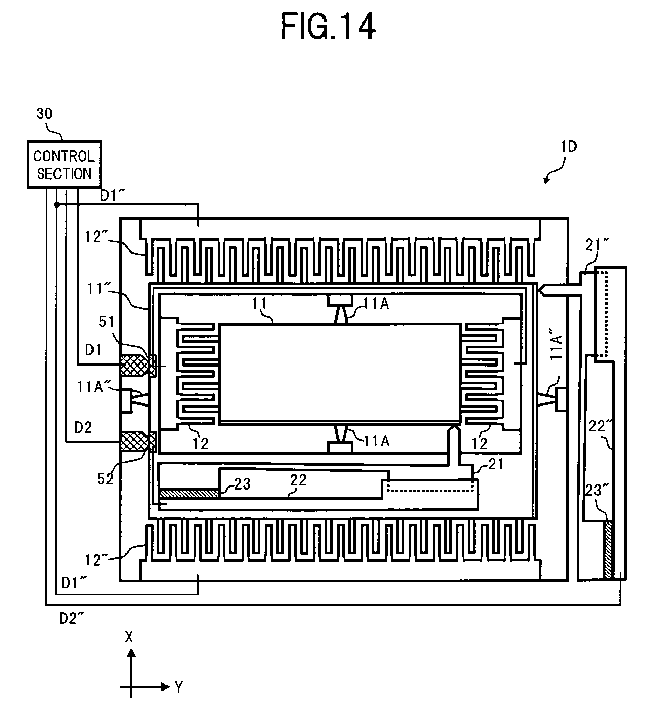

Moreover, in the above described first to third embodiments, there has been described the MEMS mirror capable of swinging around one axis. However, the present invention can be applied to a MEMS mirror capable of swinging around two or more axes. For example, in the case where the first embodiment is applied to a MEMS mirror capable of swinging around two axes, a configuration as shown in FIG 14 is achieved. In this MEMS mirror 1 D of biaxial structure, on a movable body 11" capable of swinging around the Y-axis, there are formed the movable body 11 capable of swinging around the X-axis and the movable body electrodes 12, 12, and further, the stopper 21, the stopper electrode 22, and the insulating pad 23. The movable body 11" on the Y-axis side is swung around a torsion bar 11A" by movable body electrodes 12", 12", and is damped by a stopper 21" shown on the right side of FIG 14. The supply of the movable body drive signal D1 to the movable body electrode 12, 12 on the X-axis side and the supply of the stopper drive signal D2 to the stopper electrode 21 are performed, respectively, through electrode contacts 51 and 52 shown on the left side of FIG 14. The electrode contacts 51 and 52 respectively have a slider structure keeping the contact state even when the movable body 11" on the Y-axis side is swung.

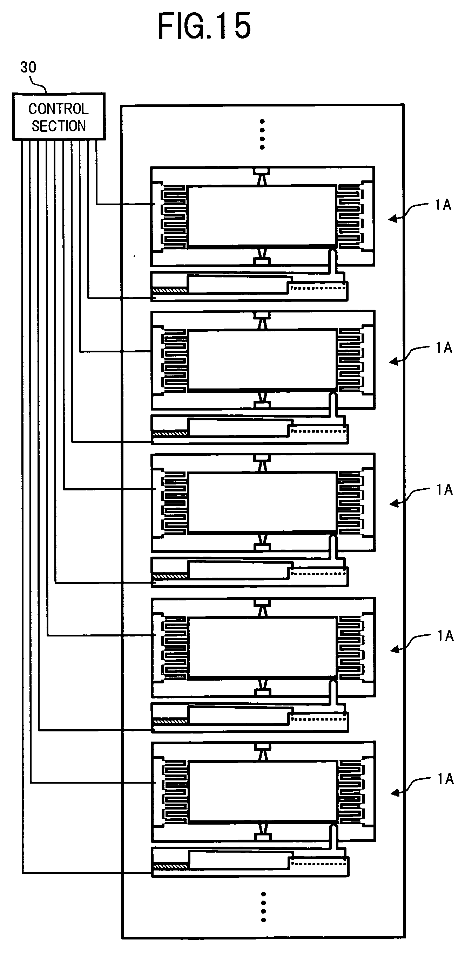

In addition, in the above described first to third embodiments, there has been described a single MEMS mirror. However, as shown in FIG 15 for example, a plurality of MEMS mirrors 1A is arranged on the same plane to be arrayed. Note, FIG 15 shows a configuration example in which a plurality of MEMS mirrors 1A in the first embodiment is arrayed. However, it is surely possible to array a plurality of MEMS mirrors 1 B in the second embodiment or to array a plurality of MEMS mirrors 1C in the third embodiment.

## Claims

1. A stabilization apparatus for stabilizing an operation of a movable mirror including a movable body capable of swinging around at least one axis, comprising:
damping means displaceable between a first position being in contact under pressure with one side face of said movable body, which is vertical to an axial direction of said movable body, and a second position apart from said side face, for damping said movable body at said first position; and
control means for controlling the displacement of said damping means according to a drive condition of said movable body.

2. A stabilization apparatus according to claim 1,
wherein said damping means includes a stopper displaceable between said first position and said second position, and an electrode arranged to face said stopper, in which said stopper is displaced between said first position and said second position by an electrostatic force generated between said stopper and said electrode, according to a drive voltage applied to said electrode; and
said control means controls the drive voltage applied to the electrode of said damping means, according to the drive condition of said movable body.

3. A stabilization apparatus according to claim 2,
wherein, in said damping means, said stopper is on said first position in a state where the drive voltage is not applied to said electrode, and said stopper is displaced to said second position when a predetermined drive voltage is applied to said electrode.

4. A stabilization apparatus according to claim 2,
wherein, in said damping means, said stopper is on said second position in a state where the drive voltage is not applied to said electrode, and said stopper is displaced to said first position when a predetermined drive voltage is applied to said electrode.

5. A stabilization apparatus according to claim 2,
wherein said movable body is processed such that a cross section of said one side face thereof vertical to the axial direction has an acute angle shape; and
said stopper is processed such that a tip end portion thereof has a mound shape, and said tip end portion is in contact with the side face of said movable body, which is processed to have the acute angle shape, at said first position.

6. A stabilization apparatus according to claim 5,
wherein said stopper is processed such that said tip end portion has a saw-tooth shape.

7. A stabilization apparatus according to claim 1,
wherein said control means displaces said damping means to said second position, to release said movable body to freely swing, immediately before said movable body is driven, and at the time when an angle of said movable body reaches a target value after said movable body is driven, displaces said damping means to said first position, to damp said movable body to be fixed at said angle.

8. A stabilization apparatus according to claim 1,
wherein said control means displaces said damping means to said first position, to make said movable body to be in a half fixed state where said movable body and said damping means are capable of sliding, immediately before said movable body is driven; at the time when a predetermined standby time has elapsed after said movable body was driven, displaces said damping means to said second position, to release said movable body to freely swing; and at the time when an angle of said movable body reaches a target value, displaces said damping means to said first position, to damp said movable body to be fixed at said angle.

9. A stabilization apparatus according to claim 1,
wherein said control means displaces said damping means to said second position, to release said movable body to freely swing, immediately after said movable body is driven: and repetitively performs, in a cycle previously set based on the resonance frequency of said movable body, a switching operation of once displacing said damping means to said first position, to damp said movable body, and thereafter, returning said damping means to said second position; and at the time when an angle of said movable body reaches a target value, displaces said damping means to said first position, to make said movable body to be fixed at said angle.

10. A stabilization apparatus according to claim 9,
wherein said control means repetitively performs said switching operation in a cycle corresponding to four times the resonance frequency of said movable body.

11. A stabilization apparatus according to claim 1,
wherein a set of said damping means is arranged symmetrically on both side faces of said movable body, which are vertical to the axial direction of said movable body.

12. A stabilization apparatus according to claim 1,
wherein when said movable body is capable of swinging around a plurality of axes,
said damping means are disposed in plural numbers respectively corresponding to side faces of said movable body, which are vertical to respective axial directions of said movable body, and
according to the drive condition of said movable body corresponding to the respective axes, said control means controls the displacement of the relevant damping means.

13. A stabilization apparatus according to claim 1,
wherein when a plurality of movable mirrors is arranged on the same plane,
said damping means are disposed in plural numbers respectively corresponding to said respective movable mirrors, and
according to drive conditions of said respective movable mirrors, said control means controls the displacement of the relevant damping means.
